# EUROPÄISCHE PATENTANMELDUNG

(11) **EP 3 375 977 A1**
(43) Veröffentlichungstag der Anmeldung: **19.09.2018**
(21) Anmeldenummer: 17161500.8
(22) Anmeldetag: 17.03.2017
(51) Int. Cl.: F01D 5/14

(54) **KONTURIERUNG EINER SCHAUFELGITTERPLATTFORM**

(71) Anmelder: MTU Aero Engines AG, 80995 München (DE)
(72) Erfinder: Maatouk, Fadi, 80807 München (DE); Mahle, Inga, 81669 München (DE); Brettschneider, Markus, 85757 Karlsfeld (DE)

(57) **Zusammenfassung**

Offenbart ist ein Schaufelgittersegment (110, 120, 130) eines Schaufelgitters für eine Strömungsmaschine, wobei das Schaufelgittersegment eine Plattform (10) mit einer Plattformoberfläche sowie mindestens zwei Schaufelblätter (20, 30) umfasst, die durch ihre jeweiligen An- und Abströmkanten (23, 33, 24, 34) eine axiale Gitterbreite (g) bestimmen. Die Plattformoberfläche weist eine Erhebung (111, 121, 131) mit mindestens einem höchsten Punkt auf, der wenigstens 20% und höchstens 70% der axialen Gitterbreite (g) stromab der Anströmkanten (23, 33) der Schaufelblätter (20, 30) liegt. Die Erhebung (111, 121, 131) erstreckt sich von der Druckseite (21) eines ersten der Schaufelblätter (20) bis zur Saugseite eines zweiten der Schaufelblätter (30).

Offenbart sind ferner eine Schaufelgitter, eine Plattform für ein Schaufelgittersegment, ein Schaufelkanal, eine Strömungsmaschine und ein Flugzeugtriebwerk.

## Beschreibung

Die vorliegende Erfindung betrifft ein Schaufelgittersegment, ein Schaufelgitter, eine Plattform und einen Schaufelkanal einer Strömungsmaschine sowie eine Strömungsmaschine und eine Flugzeugtriebwerk.

Strömungsmaschinen (wie Gas- und Dampfturbinen) weisen regelmäßig einen Strömungskanal zur Durchführung eines Fluids auf. Der Strömungskanal, der auch als "Ringraum" bezeichnet wird, ist nach radial innen durch die Welle eines Rotors begrenzt und nach radial außen durch ein Gehäuse; die Bezeichnungen "radial" ebenso wie "axial" und "Umfangsrichtung" sowie davon abgeleitete Begriffe sind in dieser Schrift - sofern nichts anderes angegeben ist - stets in Bezug auf eine Rotationsachse des Rotors zu verstehen.

Im Ringraum einer Strömungsmaschine sind Schaufelgitter angeordnet (für die auch die Bezeichnung "Schaufelkranz" üblich ist). Sie umfassen jeweils Leit- oder Laufschaufeln, die in Umfangsrichtung in im Wesentlichen regelmäßigen Abständen hintereinanderliegen, sowie zugehörige Plattformen, die auch als "Deckplatten" bezeichnet werden und die in der Regel jeweils eine anströmseitige und eine abströmseitige Plattformkante aufweisen. Diese Plattformkanten begrenzen die den Schaufeln (bzw. Schaufelblättern) zugewandte Plattformoberfläche in axialer Richtung; als "Plattformoberfläche" wird dabei in dieser Schrift die den Schaufeln (bzw. Schaufelblättern) zugewandte Oberfläche der Plattform bezeichnet.

Der Rand der Plattform, den der im Betrieb durch den Ringraum der Strömungsmaschine führende (axiale) Hauptstrom zuerst passiert, wird in dieser Schrift "anströmseitige" Plattformkante genannt; als "abströmseitige" Plattformkante wird entsprechend der andere Rand bezeichnet. Die Angaben "stromab" bzw. "stromauf" beziehen sich entsprechend auf die axiale Hauptstromrichtung und dabei lediglich auf die axiale Position, also ungeachtet einer möglichen Verschiebung in Umfangsrichtung: Insbesondere ist ein Punkt in dieser Schrift als "stromab der Anströmkanten" (oder als "stromab eines anderen Punktes") liegend zu verstehen, wenn er im Vergleich zu einer direkten Verbindung der Anströmkanten (miteinander) an der Plattformoberfläche (bzw. im Vergleich zum anderen Punkt) axial in/mit Hauptstromrichtung (also ihr folgend) versetzt angeordnet ist; Analoges gilt für die Bezeichnung "stromauf" (mit entgegengesetzter Richtung).

Der Abschnitt der Plattformoberfläche, der in axialer Richtung durch die direkten (also in Umfangsrichtung ohne axiale Abweichungen verlaufenden) Verbindungen der Anströmkanten bzw. der Abströmkanten benachbarter Schaufelblätter an der Plattformoberfläche begrenzt ist und in Umfangsrichtung durch die Saugseite des einen und die Druckseite des anderen Schaufelblattes, wird in dieser Schrift als "Schaufelzwischenstreifen" bezeichnet. Die Breite des Schaufelzwischenstreifens in Umfangsrichtung an den Anströmkanten wird "Teilungsabstand" des Schaufelgitters genannt. Er kann insbesondere als Abstand der Anströmkanten jeweils benachbarter Schaufeln in Umfangsrichtung im Bereich der Plattformoberfläche gemessen werden. Der in Richtung des vorgesehenen axialen Hauptstroms gemessene Abstand der Anströmkanten der Schaufelblätter von ihren Abströmkanten wird (axiale) "Gitterbreite" genannt.

Die Druckseite einer Schaufel und die Saugseite einer benachbarten Schaufel begrenzen in Umfangsrichtung jeweils einen sogenannten Schaufelkanal. In radialer Richtung wird dieser Schaufelkanal innerhalb der Strömungsmaschine durch sogenannte Seitenwände begrenzt. Diese werden zum einen durch die Plattformen gebildet, zum anderen durch diesen Plattformen radial gegenüberliegende Abschnitte: Im Falle von Laufschaufeln ist eine derartige gegenüberliegende Seitenwand dabei ein radial außen liegender Abschnitt (insbesondere des Gehäuses), im Falle von Leitschaufeln ein radial innen liegender Abschnitt (insbesondere einer Rotornabe).

Eine durch einen Strömungskanal geführte Fluidströmung wird regelmäßig durch die Oberflächen der Seitenwände beeinflusst. Strömungsschichten, die nahe an diesen Oberflächen verlaufen, werden dabei aufgrund ihrer geringeren Geschwindigkeit stärker abgelenkt als von den Seitenwänden fernere Strömungsschichten. So entsteht eine Sekundärströmung, die einem axialen Hauptstrom überlagert ist und die insbesondere zu Wirbeln und Druckverlusten führt.

Zur Verringerung der Sekundärströmungen werden in die Seitenwände häufig Konturierungen in Form von Erhebungen und/oder Vertiefungen eingebracht.

Aus dem Stand der Technik ist eine Vielzahl von derartigen sogenannten "Seitenwandkonturierungen" bekannt. Exemplarisch seien die Patente bzw. Patentanmeldungen der Anmelderin EP 2 487 329 B1, EP 2 787 172 A2, und EP 2 696 029 B1 genannt. Die letztgenannte Schrift offenbart dabei ein Schaufelgitter mit einer Seitenwandkonturierung, die eine druckseitige Erhebung und eine saugseitige Vertiefung aufweist, wobei ein höchster Abschnitt der Erhebung und ein tiefster Abschnitt der Vertiefung in einem Bereich von 30% bis 60% einer Erstreckung der Schaufelblätter in Axialrichtung liegen und sich voneinander um maximal 10% in Axialrichtung unterscheiden.

Die Druckschrift EP 2 586 976 A2 offenbart einen Ringraum mit einer Seitenwandkonturierung, bei der ein erster und ein zweiter Buckel in der Nähe der Druckseite eines Schaufelblattes angeordnet sind. Der zweite Buckel befindet sich dabei in einem Bereich von 10% bis 60% der Sehnenlänge des Schaufelblattes.

Aufgabe der vorliegenden Erfindung ist es, eine Technik bereitzustellen, mit der Sekundärströme im Ringraum einer Strömungsmaschine auf vorteilhafte Weise reduziert werden können.

Die Aufgabe wird gelöst durch einen Schaufelgittersegment gemäß Anspruch 1, ein Schaufelgitter nach Anspruch 11, einen Schaufelkanal gemäß Anspruch 12, eine Plattform gemäß Anspruch 13, eine Strömungsmaschine nach Anspruch 14 und ein Flugzeugtriebwerk nach Anspruch 15. Vorteilhafte Ausführungsformen sind in den Unteransprüchen, der Beschreibung und den Figuren offenbart.

Ein erfindungsgemäßes Schaufelgittersegment für ein Schaufelgitter (z.B. ein Laufschaufelgitter oder ein Leitschaufelgitter) einer Strömungsmaschine (z.B. eines Flugzeugtriebwerks) umfasst mindestens zwei (vorzugsweise im Schaufelgitter benachbarte) Schaufelblätter und eine Plattform. Die Schaufelblätter weisen jeweils eine An- und eine Abströmkante auf, durch die eine axiale Gitterbreite definiert wird. Die Plattform (die einen Teil einer radial inneren oder einer radial äußeren Seitenwand eines Schaufelkanals ausbilden kann) hat (insbesondere) eine anströmseitige Plattformkante sowie eine Plattformoberfläche. Diese weist mindestens eine Erhebung mit mindestens einem höchsten Punkt auf, der im Vergleich zu den Anströmkanten der Schaufelblätter um mindestens 20% und höchstens 70% der axialen Gitterbreite stromab liegt. Dabei erstreckt sich die mindestens eine Erhebung von der Druckseite eines ersten der Schaufelblätter bis zur Saugseite eines zweiten der Schaufelblätter (d.h. sie reicht durchgehend von der genannten Druck- zur genannten Saugseite und berührt diese Seiten).

Insbesondere kann ein erfindungsgemäßes Schaufelgittersegment eine oder mehrere Erhebung(en) bzw. einen oder mehrere höchste Punkte jeweils mit den oben und/oder nachfolgend genannten Eigenschaften haben. Die Angabe "mindestens eine" wird für die Erhebung und den höchsten Punkt im Folgenden aus Gründen der besseren Lesbarkeit zuweilen weggelassen.

Als "Erhebung" ist in dieser Schrift eine lokale Ausformung (wie beispielsweise ein Buckel bzw. Vorsprung) der Plattformoberfläche zu verstehen, in der sich die Plattformoberfläche (im Vergleich zu einer Nullhöhenfläche bzw. zur Plattformoberfläche einer nicht konturierten Plattform) radial in dieselbe Richtung erstreckt, in der auch die Schaufelblätter von der Plattform abstehen. Als "Vertiefung" ist (weiter unten) analog eine lokale Ausformung der Plattformoberfläche in die entgegengesetzte Richtung zu verstehen (wie z.B. eine Senke bzw. Nische).

Den Bezeichnungen "Erhebung" und "Vertiefung" (ebenso wie Begriffen wie "Höhe", "Tiefe" oder ähnlichem) liegt hier also eine Orientierung bzw. ein Koordinatensystem zugrunde, bei der/dem sich die Schaufelblätter und eine Erhebung von der Plattformoberfläche jeweils nach "oben", d.h. nach radial innen (bei einer Erhebung auf einer den Ringraum nach radial außen begrenzenden Plattform) oder nach radial außen (bei einer Erhebung auf einer den Ringraum nach radial innen begrenzenden Plattform), erstrecken. Dementsprechend erstreckt sich eine Vertiefung in die entgegengesetzte Richtung nach "unten", d.h. nach radial außen (bei einer Vertiefung auf einer den Ringraum nach radial außen begrenzenden Plattform) oder nach radial innen (bei einer Vertiefung auf einer den Ringraum nach radial innen begrenzenden Plattform).

Als höchste bzw. tiefste Punkte werden jeweils die Punkte der Erhebung bzw. Vertiefung verstanden, in denen sich diese am weitesten radial in die jeweilige Richtung erstreckt. Die höchsten bzw. tiefsten Punkte können jeweils einen Flächenabschnitt oder eine Kurve ausbilden (wenn die Erhebung beispielsweise einen Rücken oder Grat bzw. ein Plateau ausbildet; Analoges gilt für eine Vertiefung) oder singulär sein. Gemäß einer exemplarischen Ausführungsform weist die Erhebung genau einen höchsten Punkt und/oder weist die Vertiefung genau einen tiefsten Punkt auf.

Ein erfindungsgemäßes Schaufelgittersegment kann einteilig oder zusammengesetzt sein. Insbesondere kann die Plattform einteilig sein oder zwei oder mehr Teile umfassen, von denen jeweils eines der Schaufelblätter absteht, oder die Plattform kann als separates Bauteil ausgebildet sein, das zwischen den Schaufelblättern angeordnet ist oder werden kann.

Entsprechend ist eine erfindungsgemäße Plattform dazu eingerichtet, in Umfangsrichtung an jeder Seite an ein Schaufelblatt anzugrenzen und mit den Schaufelblättern (von denen keines, eines oder beide fest an die Plattform angeformt sein kann) zusammen ein erfindungsgemäßes Schaufelgittersegment gemäß einer der in dieser Schrift offenbarten Ausführungsformen auszubilden.

Ein erfindungsgemäßes Schaufelgitter umfasst mindestens ein erfindungsgemäßes Schaufelgittersegment gemäß einer der in dieser Schrift offenbarten Ausführungsformen. Eine erfindungsgemäße Strömungsmaschine (beispielsweise für ein Flugzeugtriebwerk) umfasst ein oder mehrere erfindungsgemäße(s) Schaufelgitter. Ein erfindungsgemäßes Flugzeugtriebwerk umfasst eine erfindungsgemäße Strömungsmaschine.

Ein erfindungsgemäßer Schaufelkanal führt durch ein erfindungsgemäßes Schaufelgittersegment gemäß einer der in dieser Schrift offenbarten Ausführungsformen, ist also durch ein derartiges Schaufelgittersegment sowie eine dessen Plattform gegenüberliegende (der Plattformoberfläche zugewandte) Seitenwand begrenzt. In Umfangsrichtung ist der Schaufelkanal durch die Druckseite eines der Schaufelblätter des Schaufelgittersegments und durch die dieser gegenüberliegende Saugseite des (benachbarten) anderen der Schaufelblätter begrenzt.

Ein erfindungsgemäßes Schaufelgittersegment, ein erfindungsgemäßes Schaufelgitter, ein erfindungsgemäßer Schaufelkanal, eine erfindungsgemäße Plattform und eine erfindungsgemäße Strömungsmaschine beeinflussen durch die erfindungsgemäße Geometrie der Plattformoberfläche das statische Druckfeld an der Plattformoberfläche und auf die Schaufeln im Randbereich. Dadurch wird jeweils eine Reduktion der Sekundärströmung, insbesondere von Wirbeln im Schaufelkanal ermöglicht. So können Verluste verringert und die Zuströmung in ein ggf. stromab liegendes weiteres Schaufelgitter verbessert werden.

Das Schaufelgittersegment bzw. das Schaufelgitter bzw. der Strömungskanal bzw. die Plattform können insbesondere Teil einer Turbine, insbesondere einer Niederdruckturbine bzw. dazu eingerichtet sein, in einer (Niederdruck-)Turbine eingebaut bzw. verwendet zu werden. Die Schaufelblätter können jeweils Leit- oder Laufschaufelblätter sein. Die Plattform kann dazu eingerichtet sein, einen Schaufelkanal durch das Schaufelgittersegment oder einen Ringraum nach radial innen oder nach radial außen zu begrenzen.

Insbesondere kann die Plattformoberfläche mindestens einen (z.B. unkonturierten) Oberflächenabschnitt umfassen, der sich von der Druckseite des ersten bis zur Saugseite des zweiten erstreckt und der eine Nullhöhenfläche in dem Sinne bestimmt, dass eine Erhebung radial über (und ggf. eine Vertiefung radial unter) der Nullfläche liegt. Insbesondere kann stromab und/oder stromauf der Erhebung ein derartiger Oberflächenabschnitt auf Nullhöhe angeordnet sein.

Gemäß einer vorteilhaften Ausführungsform der vorliegenden Erfindung beträgt ein in Umfangsrichtung gemessener Abstand des mindestens einen höchsten Punktes der Erhebung von der Druckseite des ersten Schaufelblattes höchstens 20% eines Teilungsabstandes des Schaufelgittersegments; insbesondere kann ein Teil des ersten Schaufelblattes an dessen Druckseite auf dem mindestens einen höchsten Punkt fußen, so dass also das erste Schaufelblatt entlang einer Kante in die Plattformoberfläche übergeht, die den mindestens einen höchsten Punkt umfasst. In einer Umgebung eines solchen höchsten Punktes kann die Plattformoberfläche konvex oder konkav geformt sein.

Als vorteilhaft hat sich eine Ausführungsform erwiesen, bei der eine Höhe der Erhebung mindestens in einem Teilbereich der Plattformoberfläche in Umfangsrichtung zur Saugseite des zweiten Schaufelblattes hin monoton abnimmt, so dass die Erhebung dort also bis zur Saugseite des zweiten Schaufelblattes monoton abflacht. Dabei kann die Erhebung insbesondere in Umfangsrichtung von ihrem höchsten Punkt oder Maximum bis hin zur Saugseite des zweiten Schaufelblattes monoton abflachen und/oder bis an die Saugseite heranreichen, insbesondere diese berühren und/oder kontaktieren.

Eine Grenzlinie zwischen der Plattformoberfläche und der Saugseite des zweiten Schaufelblattes kann in ihrer stromauf liegenden Hälfte vollständig auf Nullniveau (also entlang einer Nullhöhenlinie) verlaufen. Alternativ kann die genannte Grenzlinie in ihrer stromauf liegenden Hälfte oder sogar in einem am weitesten stromauf liegenden Drittel auf der Erhebung verlaufen, d.h. das Schaufelblatt kann an seiner Saugseite in einem Abschnitt, der sich von der Anströmkante des zweiten Schaufelblatts bis 50% (bzw. bis etwa 33,3%) der axialen Gitterbreite stromab der Anströmkante erstreckt, mindestens teilweise auf der Erhebung fußen. Insbesondere kann die Erhebung sich von der Druckseite des ersten Schaufelblattes zu einem stromauf liegenden derartigen Abschnitt des zweiten Schaufelblattes hin erstrecken.

In einer stromab liegenden Hälfte kann eine Grenzlinie zwischen der Plattformoberfläche und der Saugseite des zweiten Schaufelblattes vollständig auf Nullniveau (d.h. entlang einer Nullhöhenlinie) verlaufen, oder eine stromab liegende Hälfte der Saugseite des zweiten Schaufelblattes (also ein Abschnitt der Saugseite des zweiten Schaufelblattes, der sich von dessen Abströmkante bis 50% der axialen Gitterbreite stromauf der Abströmkante erstreckt) kann mindestens teilweise auf der Erhebung fußen, d.h. mindestens ein Teil der Grenzlinie zwischen Plattformoberfläche und der genannten Saugseite kann in dem besagten Abschnitt auf der Erhebung verlaufen. Insbesondere kann die Erhebung sich von der Druckseite des ersten Schaufelblattes zu einer stromab liegenden derartigen Hälfte des zweiten Schaufelblattes hin erstrecken.

Die Erhebung kann sich in axialer Richtung über einen von den Schaufelblättern ausgebildeten Schaufelzwischenstreifen hinaus erstrecken. Insbesondere kann sie einen Bereich aufweisen, der stromauf der Anströmkanten der Schaufelblätter liegt und/oder einen Bereich, der stromab der Abströmkanten der Schaufelblätter liegt.

Gemäß einer vorteilhaften Ausführungsvariante der vorliegenden Erfindung weist die Plattformoberfläche mindestens eine Vertiefung auf. Vorzugsweise liegt eine solche Vertiefung vollständig (also mit jedem ihrer Punkte) stromauf der mindestens einen Erhebung. Mindestens ein tiefster Punkt einer derartigen Vertiefung liegt vorzugsweise stromauf der Anströmkanten der Schaufelblätter. Es hat sich gezeigt, dass dadurch die Sekundärströmung durch das Schaufelgitter besonders vorteilhaft beeinflusst werden kann.

Als vorteilhaft hat sich eine Ausführungsform erwiesen, bei der die Erhebung eine erste Erhebung ist und die Plattformoberfläche mindestens eine weitere Erhebung aufweist, die sich ebenfalls von der Druckseite des ersten der Schaufelblätter bis zur Saugseite des zweiten der Schaufelblätter erstreckt. Die weitere Erhebung kann insbesondere vollständig (also in jedem ihrer Punkte) stromab der ersten Erhebung angeordnet sein. Sie kann mindestens einen höchsten Punkt aufweisen, der höchstens 30% der axialen Gitterbreite stromauf der Abströmkanten der Schaufelblätter liegt. Insbesondere kann ein am weitesten stromab liegendes Drittel der Druckseite des ersten Schaufelblattes und/oder der Saugseite des zweiten Schaufelblattes (also ein Abschnitt der Druck- bzw. Saugseite des jeweiligen Schaufelblattes, der sich von dessen Abströmkante stromauf erstreckt und dabei ein Drittel der axialen Gitterbreite einnimmt) mindestens teilweise auf der weiteren Erhebung fußen.

Der mindestens eine höchste Punkt der weiteren Erhebung hat vorzugsweise in Umfangsrichtung gemessen einen Abstand von der Saugseite des zweiten Schaufelblattes, der höchstens 20% des Teilungsabstandes des Schaufelgittersegments beträgt. Insbesondere kann die weitere Erhebung ihre(n) höchsten Punkt(e) auf einer Grenzlinie zwischen dem zweiten Schaufelblatt (bzw. dessen Saugseite) und der Plattformoberfläche haben. In einer Umgebung dieses Punktes bzw. dieser Punkte kann die Plattformoberfläche konvex oder konkav geformt sein.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: ein Schaufelgittersegment einer ersten exemplarischen Ausführungsform der vorliegenden Erfindung in Draufsicht;
- Figur 2:: ein Schaufelgittersegment einer alternativen exemplarischen Ausführungsform der vorliegenden Erfindung in Draufsicht; und
- Figur 3:: ein Schaufelgittersegment einer weiteren exemplarischen Ausführungsvariante der vorliegenden Erfindung in Draufsicht

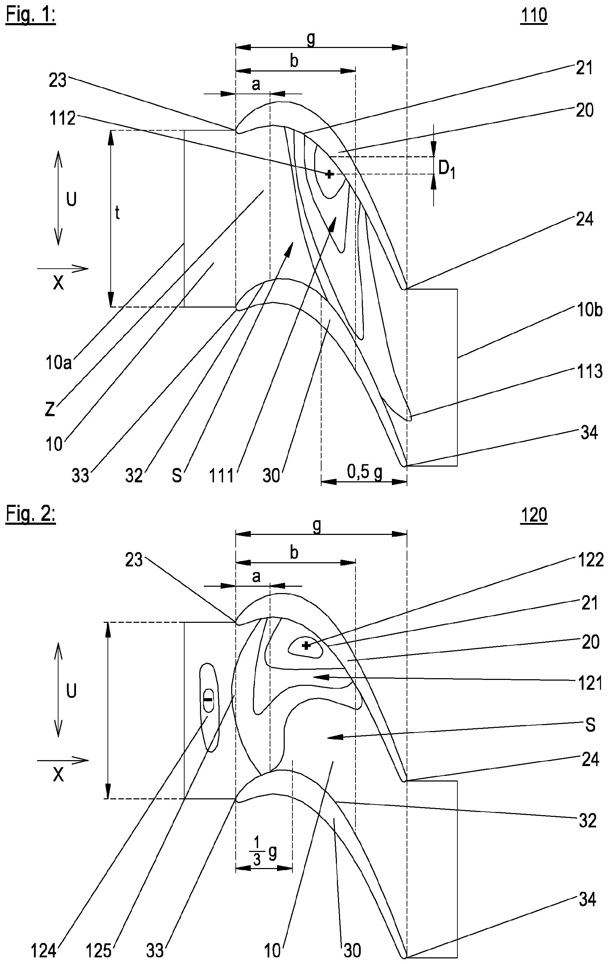

In Figur 1 ist in Draufsicht (mit radialer Blickrichtung) schematisch eine exemplarische, abgewickelte Ausführungsform eines erfindungsgemäßen Schaufelgittersegments 110 dargestellt. Es umfasst Schaufelblätter 20, 30, die jeweils eine Druckseite und eine Saugseite aufweisen, sowie eine erfindungsgemäße Plattform 10 mit einer (bezogen auf die vorgesehene axiale Hauptstromrichtung X) anströmseitigen Plattformkante 10a und einer abströmseitigen Plattformkante 10b. Die Plattform kann einteilig oder beispielsweise zweiteilig ausgebildet sein (nicht dargestellt), insbesondere kann sie zwei Teile umfassen, von denen jeweils eines der Schaufelblätter 20, 30 absteht.

Ein Schaufelzwischenstreifen Z erstreckt sich in Umfangsrichtung U von der Druckseite 21 eines ersten Schaufelblatts 20 zur Saugseite 32 des zweiten Schaufelblattes 30. In axialer Richtung wird der Schaufelzwischenstreifen Z anströmseitig durch eine Verbindung der Anströmkanten 23, 33 der Schaufelblätter 20, 30 und abströmseitig durch eine Verbindung der jeweiligen Abströmkanten 24, 34 begrenzt; die Verbindungen verlaufen dabei auf der Plattformoberfläche rein in Umfangsrichtung (also ohne Abweichung in axialer Richtung), und sie haben einen Abstand g voneinander, welcher der axialen Gitterbreite g des Schaufelzwischenstreifens entspricht. Ein Teilungsabstand t ist als der Abstand der Anströmkanten 23, 33 voneinander an der Plattformoberfläche definiert.

Die Plattformoberfläche weist eine in der Figur 1 durch Höhenlinien verdeutlichte Erhebung 111 auf, die sich von der Druckseite 21 des ersten Schaufelblattes 20 bis zur Saugseite 32 des zweiten Schaufelblattes 30 erstreckt, also die Druckseite 21 berührt und von dieser durchgehend bis zur Saugseite 32 verläuft und diese ebenfalls berührt.

In der Figur 1 ist ein Streifenbereich S des Schaufelzwischenraums Z kenntlich gemacht, dessen anströmseitige Begrenzung in der vorgesehenen axialen Hauptstromrichtung X einen Abstand a=0,2g von der Verbindung der Anströmkanten 23, 33 an der Plattformoberfläche hat und dessen abströmseitige Begrenzung einen Abstand b=0,7g von derselben Verbindung hat.

Ein höchster Punkt 112 der Erhebung ist in diesem Streifenbereich S angeordnet; er liegt somit wenigstens 20% und höchstens 70% der axialen Gitterbreite g stromab der Anströmkanten 23, 33 der Schaufelblätter 20, 30.

In Umfangsrichtung U gemessen hat der höchste Punkt 112 der Erhebung 111 bei dem in Figur 1 gezeigten Schaufelgittersegment 110 einen Abstand D₁ von der Druckseite 21 des ersten Schaufelblatts 20, wobei D₁ ≤ t/5 gilt. Der genannte Abstand beträgt somit bei dieser Ausführungsform höchstens 20% des Teilungsabstandes t.

Wie durch die Höhenlinien angedeutet ist, nimmt im in der Figur 1 gezeigten Ausführungsbeispiel in dem genannten Streifenbereich S die Höhe der Erhebung 111 zur Saugseite 32 des zweiten Schaufelblattes 30 in Umfangsrichtung U hin monoton ab; die Erhebung 111 wird dort bis zur Saugseite 32 hin immer flacher.

Das erste Schaufelblatt 20 fußt im dargestellten Beispiel an seiner Druckseite in seinem (bezogen auf die axiale Richtung) mittleren Abschnitt auf der Erhebung 111. Das zweite Schaufelblatt 30 fußt an seiner Saugseite 32 in einer stromab liegenden Hälfte auf der Erhebung 111. In einer stromauf liegenden Hälfte hingegen fußt das zweite Schaufelblatt 30 an seiner Saugseite 32 beim dargestellten Ausführungsbeispiel auf einer Nullhöhenfläche (in dem Sinne, dass eine Erhebung radial oberhalb (bzw. ggf. eine Vertiefung radial unterhalb) der Nullhöhenfläche liegt, wobei, wie oben erwähnt, ein Schaufelkanal als "oberhalb" der Plattformoberfläche liegend angesehen wird).

Die Erhebung 111 ragt stromab über die Abströmkanten hinaus, umfasst also einen Bereich 113, der stromab der Abströmkanten 24, 34 liegt.

In der Figur 2 ist eine alternative exemplarische Ausführungsform eines erfindungsgemäßen Schaufelgittersegments 120 in Draufsicht (und abgewickelter Darstellung) gezeigt.
Die Oberfläche der Plattform 10 weist dabei eine Erhebung 121 auf, die einen im Streifenbereich S angeordneten höchsten Punkt aufweist; der Streifenbereich ist dabei wie mit Bezug zur Figur 1 beschrieben definiert. Die Erhebung 121 erstreckt sich von der Druckseite 21 des ersten Schaufelblattes 20 zur Saugseite 32 des zweiten Schaufelblattes. Dabei fußt ein stromauf liegendes Drittel des zweiten Schaufelblatts 30 an dessen Saugseite 32 auf der Erhebung 121 (d.h. eine Begrenzungslinie zwischen der Plattformoberfläche und der Saugseite 32 verläuft teilweise auf der Erhebung 121). Stromab des Drittels, insbesondere in einer stromab liegenden Hälfte fußt das zweite Schaufelblatt 30 bei diesem Beispiel an seiner Druckseite 32 hingegen vollständig (also durchgehend) auf einer Nullhöhenfläche.

Die Erhebung 121 ragt stromauf über die Anströmkanten 23, 33 hinaus, umfasst also einen Bereich 125, der stromauf der Anströmkanten der Schaufelblätter 20, 30 liegt.

Bei der in der Figur 2 gezeigte Ausführungsform weist die Plattform 10 zudem eine Vertiefung 124 auf, die vorliegend vollständig (also mit jedem ihrer Punkte) stromauf der Anströmkanten 23, 33 angeordnet ist.

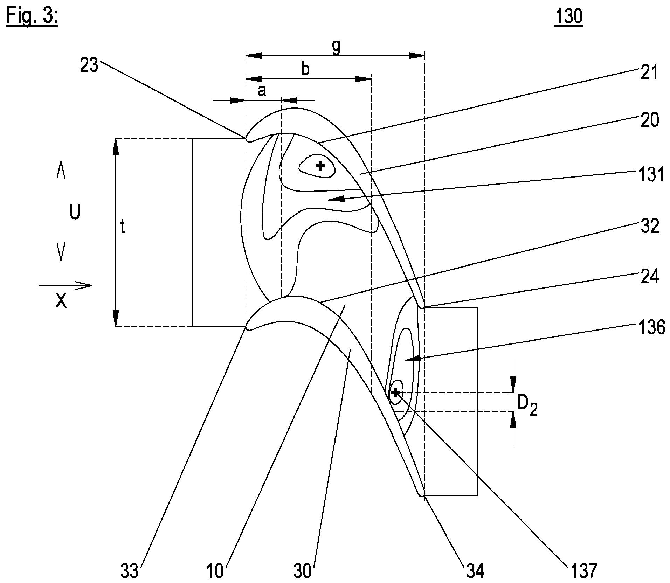

In der Figur 3 ist ein weiteres Ausführungsbeispiel eines erfindungsgemäßen Schaufelgittersegments 130 abgewickelt und in Draufsicht dargestellt. Seine Plattformoberfläche weist eine Erhebung 131 auf, die entsprechend der in der Figur 2 gezeigten Erhebung 121 ausgebildet ist und daher nicht nochmals beschrieben wird.

Die Erhebung 131 ist dabei eine erste Erhebung der Plattformoberfläche, die zudem eine weitere Erhebung 136 aufweist. Die weitere Erhebung liegt vollständig (in jedem ihrer Punkte) stromab der Erhebung 131, und sie erstreckt sich von der Druckseite 21 des ersten Schaufelblattes 20 bis zur Saugseite 32 des zweiten Schaufelblattes 30. Für einen in Umfangsrichtung gemessenen Abstand D₂ eines höchsten Punktes 137 der Erhebung 136 von der Saugseite 32 des zweiten Schaufelblattes 30 gilt vorzugsweise höchstens D₂ ≤ t/5, so dass also der Abstand höchstens 20% des Teilungsabstandes t beträgt. Der höchste Punkt 137 liegt bei diesem Ausführungsbeispiel weniger als 30% der axialen Gitterbreite g stromauf der Abströmkanten 24, 34 der Schaufelblätter.

Offenbart ist ein Schaufelgittersegment 110, 120, 130 eines Schaufelgitters für eine Strömungsmaschine, wobei das Schaufelgittersegment eine Plattform 10 mit einer Plattformoberfläche sowie mindestens zwei Schaufelblätter 20, 30 umfasst, die durch ihre jeweiligen An- und Abströmkanten 23, 33, 24, 34 eine axiale Gitterbreite g bestimmen. Die Plattformoberfläche weist eine Erhebung 111, 121, 131 mit mindestens einem höchsten Punkt 112, 122 auf, der wenigstens 20% und höchstens 70% der axialen Gitterbreite g stromab der Anströmkanten 23, 33 der Schaufelblätter 20, 30 liegt. Die Erhebung 111, 121, 131 erstreckt sich von der Druckseite 21 eines ersten der Schaufelblätter 20 bis zur Saugseite 32 eines zweiten der Schaufelblätter 30.

Offenbart sind ferner eine Schaufelgitter, eine Plattform für ein Schaufelgittersegment, ein Schaufelkanal, eine Strömungsmaschine und ein Flugzeugtriebwerk.

### Bezugszeichen

- 10: Plattform
- 10a: anströmseitige Plattformkante
- 10b: abströmseitige Plattformkante

- 20, 30: Schaufelblatt
- 21: Druckseite des ersten Schaufelblatts 20
- 23, 33: Anströmkante
- 24, 34: Abströmkante
- 32: Saugseite des zweiten Schaufelblatts 30

- 110, 120 130: Schaufelgittersegment
- 111, 121, 131: Erhebung
- 112, 122,: höchster Punkt der Erhebung
- 113: stromab der Abströmkanten liegender Bereich der Erhebung
- 125: stromauf der Anströmkanten liegender Bereich der Erhebung
- 136: weitere Erhebung
- 137: höchster Punkt der weiteren Erhebung
- 124: Vertiefung

- a: axialer Abstand von Anströmkanten 23, 33 und anströmseitiger Begrenzung des Streifenabschnitts S
- b: axialer Abstand von Anströmkanten 23, 33 und abströmseitiger Begrenzung des Streifenabschnitts S
- g: axiale Gitterbreite
- t: Teilung sab stand

- D₁: in Umfangsrichtung gemessener Abstand des höchsten Punktes 112 von der Druckseite 21 des ersten Schaufelblattes 20
- D₂: in Umfangsrichtung gemessener Abstand des höchsten Punktes 137 von der Saugseite 32 des zweiten Schaufelblattes 30

- S: Streifenabschnitt
- U: Umfangsrichtung
- X: vorgesehene axiale Hauptstromrichtung
- Z: Schaufelzwischenstreifen

## Patentansprüche

1. Schaufelgittersegment (110, 120, 130) eines Schaufelgitters für eine Strömungsmaschine,
wobei das Schaufelgittersegment eine Plattform (10) mit einer Plattformoberfläche sowie mindestens zwei Schaufelblätter (20, 30) umfasst, die durch ihre jeweiligen An- und Abströmkanten (23, 33, 24, 34) eine axiale Gitterbreite (g) bestimmen,
wobei die Plattformoberfläche eine Erhebung (111, 121, 131) mit mindestens einem höchsten Punkt (112, 122) aufweist, der wenigstens 20% und höchstens 70% der axialen Gitterbreite (g) stromab der Anströmkanten (23, 33) der Schaufelblätter (20, 30) liegt,
wobei die Erhebung (111, 121, 131) sich von der Druckseite (21) eines ersten der Schaufelblätter (20) bis zur Saugseite eines zweiten der Schaufelblätter (30) erstreckt.

2. Schaufelgittersegment nach Anspruch 1, wobei ein in Umfangsrichtung (U) gemessener Abstand (D₁) des mindestens einen höchsten Punktes (112, 122) der Erhebung von der Druckseite (21) des ersten Schaufelblattes (20) höchstens 20% eines Teilungsabstandes (t) des Schaufelgittersegments beträgt.

3. Schaufelgittersegment nach einem der Ansprüche 1 oder 2, wobei die Erhebung mindestens in einem Teilbereich der Plattformoberfläche in Umfangsrichtung (U) bis zur Saugseite (32) des zweiten Schaufelblattes (30), insbesondere von dem mindestens einen höchsten Punkt (112, 122) der Erhebung bis zur Saugseite (32) monoton abflacht.

4. Schaufelgittersegment nach einem der vorhergehenden Ansprüche, wobei ein mittlerer Abschnitt oder eine stromauf liegende Hälfte oder sogar ein am weitesten stromauf liegendes Drittel des zweiten Schaufelblattes (30) an dessen Saugseite (32) mindestens teilweise auf der Erhebung (121, 131) fußt
und/oder wobei eine stromab liegende Hälfte des zweiten Schaufelblattes (30) an seiner Saugseite (32) mindestens teilweise auf der Erhebung (111) fußt.

5. Schaufelgittersegment nach einem der vorhergehenden Ansprüche, wobei ein Bereich (113) der Erhebung (111) stromab der Abströmkanten (24, 34) der Schaufelblätter liegt.

6. Schaufelgittersegment nach einem der vorhergehenden Ansprüche, wobei ein Bereich (124) der Erhebung (121, 131) stromauf der Anströmkanten (23, 33) der Schaufelblätter liegt.

7. Schaufelgittersegment nach einem der vorhergehenden Ansprüche, wobei die Plattformoberfläche mindestens eine Vertiefung (124) mit mindestens einem tiefsten Punkt umfasst, der stromauf der Anströmkanten (24, 34) liegt.

8. Schaufelgittersegment nach einem der vorhergehenden Ansprüche, wobei die Erhebung eine erste Erhebung (131) ist und die Plattformoberfläche mindestens eine weitere Erhebung (136) aufweist, die sich von der Druckseite (21) des ersten der Schaufelblätter (20) bis zur Saugseite (32) des zweiten der Schaufelblätter (30) erstreckt.

9. Schaufelgittersegment nach Anspruch 8, wobei die weitere Erhebung (136) mindestens einen höchsten (137) Punkt aufweist, dessen in Umfangsrichtung (U) gemessener Abstand (D₂) von der Saugseite (32) des zweiten Schaufelblattes (30) höchstens 20% eines Teilungsabstandes (t) des Schaufelgittersegments beträgt.

10. Schaufelgittersegment nach einem der Ansprüche 8 oder 9, wobei die weitere Erhebung (136) vollständig stromab der ersten Erhebung (131) angeordnet ist.

11. Schaufelgitter für eine Strömungsmaschine, das mindestens ein Schaufelgittersegment (110, 120, 130) nach einem der vorangehenden Ansprüche umfasst.

12. Schaufelkanal einer Strömungsmaschine, der durch ein Schaufelgittersegment (110, 120, 130) nach einem Ansprüche 1 bis 10 sowie durch eine der Plattform (10) des Schaufelgittersegments gegenüberliegende Seitenwand begrenzt ist.

13. Plattform (10) für ein Schaufelgittersegment (110, 120, 130) gemäß einem der Ansprüche 1 bis 10, wobei die Plattform dazu eingerichtet ist, in Umfangsrichtung (U) an die mindestens zwei Schaufelblätter (20, 30) anzugrenzen.

14. Strömungsmaschine mit mindestens einem Schaufelgitter gemäß Anspruch 11.

15. Flugzeugtriebwerk mit einer Strömungsmaschine nach Anspruch 14.
